# FASCICULE DE BREVET EUROPEEN

(11) **EP 4 048 883 B1**
(45) Date de publication et mention de la délivrance du brevet: **20.03.2024**
(21) Numéro de dépôt: 20804615.1
(22) Date de dépôt: 20.10.2020
(51) Int. Cl.: F02K 1/72, F02K 1/76

(54) **INVERSEUR DE POUSSÉE À VOLETS COMMANDÉS PAR UN MÉCANISME DOTÉ DE GUIGNOLS AÉRONAUTIQUES**
SCHUBUMKEHRVORRICHTUNG MIT KLAPPEN, DIE DURCH EINEN MECHANISMUS MIT AERONAUTISCHEN WINKELHEBELN GESTEUERT WERDEN
THRUST REVERSER WITH FLAPS CONTROLLED BY A MECHANISM EQUIPPED WITH AERONAUTICAL BELLCRANKS

(30) Priorité: 25.10.2019 FR 1911975
(43) Date de publication de la demande: 31.08.2022
(73) Titulaire: Safran Nacelles, 76700 Gonfreville-l'Orcher (FR)
(72) Inventeur: PLAQUIN, Josse, 77550 MOISSY-CRAMAYEL (FR); RENAULT, Cedric, François, Pierre, 77550 MOISSY-CRAMAYEL (FR)
(74) Mandataire: Brevalex
(86) Numéro de dépôt international: PCT/FR2020/051885
(87) Numéro de publication internationale: WO 2021/079054

(56) Documents cités:
- EP-A1- 3 051 112
- EP-A1- 3 228 853
- FR-A1- 2 982 323
- FR-A1- 2 994 586

## Description

### Domaine technique

L'invention se rapporte au domaine des inverseurs de poussée pour ensemble propulsif d'aéronef, et plus spécifiquement au domaine des inverseurs à grilles.

### État de la technique antérieure

Un inverseur de poussée à grilles comprend généralement une structure externe mobile entre une position de fermeture et une position d'ouverture. Le déplacement de la structure externe mobile entre ces positions consiste généralement en une translation de cette structure le long d'un axe sensiblement parallèle à l'axe du moteur.

En position de fermeture, la structure externe mobile est configurée pour guider un écoulement de fluide dans l'ensemble propulsif en direction d'une tuyère d'éjection de manière à générer une poussée servant à propulser l'aéronef.

En position d'ouverture, la structure externe mobile dégage une ouverture radiale dans laquelle sont placées les grilles, de manière à rediriger vers l'avant de l'ensemble propulsif une partie de l'écoulement de fluide et générer ainsi une contre-poussée de freinage.

Les inverseurs à grilles équipent généralement des ensembles propulsifs équipés d'un turboréacteur à double flux. Dans un tel ensemble propulsif, un flux primaire circule dans une veine primaire traversant le générateur de gaz du turboréacteur et un flux secondaire circule dans une veine secondaire entourant le générateur de gaz, la veine secondaire étant délimitée radialement à l'intérieur par une structure interne fixe et radialement à l'extérieur par la structure externe mobile.

Pour générer une contre-poussée à partir du flux secondaire, une partie de ce flux est typiquement orientée vers les grilles par des volets d'obturation déployés dans la veine secondaire. En configuration de poussée directe, ces volets sont rétractés contre la paroi ou au sein d'un logement de la structure externe mobile.

Dans une architecture conventionnelle, le déploiement et la rétractation des volets d'obturation sont réalisés par des bielles reliées d'une part aux volets et d'autre part à la structure interne fixe de manière à être entraînés par le déplacement de la structure externe mobile.

En configuration de poussée directe, de telles bielles s'étendent dans la veine secondaire, radialement entre la structure interne fixe et la structure externe mobile, ce qui perturbe le flux secondaire et dégrade les performances de l'ensemble propulsif. Les documents FR2994586A1, EP3228853A1, EP3051112A1 et FR2982323A1 divulguent des inverseurs de poussée selon l'art antérieur.

### Exposé de l'invention

Afin de remédier à ce problème, l'invention a pour objet un inverseur de poussée pour ensemble propulsif d'aéronef, cet inverseur comprenant une structure externe fixe, une structure externe mobile, au moins un volet d'obturation et un mécanisme de commande configuré pour faire passer l'inverseur entre :
- une configuration de poussée directe dans laquelle la structure externe mobile est dans une position de fermeture et le volet est dans une position rétractée de manière à canaliser un écoulement de fluide dans un conduit délimité radialement à l'extérieur par la structure externe mobile, et
- une configuration d'inversion de poussée dans laquelle la structure externe mobile est dans une position d'ouverture dégageant une ouverture radiale, et dans laquelle le volet est dans une position déployée de manière à dévier au moins une partie dudit écoulement de fluide vers ladite ouverture radiale.

Selon l'invention, le mécanisme de commande comprend au moins un organe de renvoi qui est :
- relié à la structure externe mobile par une première articulation de manière à autoriser une rotation de l'organe de renvoi par rapport à la structure externe mobile autour d'un axe de rotation de cette première articulation,
- relié à la structure externe fixe par un premier organe de liaison configuré de manière à déplacer l'organe de renvoi en rotation autour de l'axe de rotation de la première articulation dans un premier sens lorsque la structure externe mobile est déplacée vers la position d'ouverture et dans un deuxième sens lorsque la structure externe mobile est déplacée vers la position de fermeture,
- relié au volet par un deuxième organe de liaison configuré de manière à déplacer le volet vers la position déployée lorsque l'organe de renvoi est déplacé dans ledit premier sens et vers la position rétractée lorsque l'organe de renvoi est déplacé dans ledit deuxième sens.

L'invention permet ainsi de commander la position du volet sans moyen de liaison du volet avec une structure fixe interne délimitant radialement à l'intérieur ledit conduit d'écoulement de fluide.

Il est ainsi possible d'éviter qu'une partie du mécanisme de commande s'étende dans ce conduit en configuration de poussée directe, ce qui permet notamment de réduire les perturbations d'écoulement de fluide en poussée directe et de réduire la consommation de carburant.

Dans un mode de réalisation, le conduit d'écoulement de fluide peut aussi être délimité radialement à l'extérieur par une surface interne du volet.

Cela permet notamment de simplifier l'architecture de l'inverseur, le volet pouvant être simplement rabattu contre la structure externe mobile.

De préférence, ledit premier organe de liaison peut comprendre au moins une bielle d'entraînement, la bielle d'entraînement étant articulée d'une part à l'organe de renvoi et d'autre part à la structure externe fixe.

L'utilisation d'une telle bielle d'entraînement permet de simplifier la géométrie et de réduire les dimensions et la masse de l'organe de renvoi.

Par exemple, l'organe de renvoi peut ainsi prendre la forme d'un guignol.

Dans un mode de réalisation, la bielle d'entraînement peut être une bielle télescopique.

Une bielle d'entraînement télescopique permet de retarder le déploiement du volet lorsque l'inverseur passe de la configuration de poussée directe à celle d'inversion de poussée, et de finaliser sa rétractation avant que la structure externe mobile n'atteigne la position de fermeture lorsque l'inverseur passe de la configuration d'inversion de poussée à celle de poussée directe.

Il en résulte une réduction de l'amplitude du débattement total de l'organe de renvoi pivotant lors d'un changement de configuration de l'inverseur, ce qui permet de réduire les dimensions relatives et donc la masse de l'organe de renvoi et du premier organe de liaison, et de réduire les risques d'interférence de l'organe de renvoi et/ou du premier organe de liaison avec le volet.

Dans un mode de réalisation, la bielle télescopique peut comprendre une pièce de guidage et une pièce coulissante au sein d'un logement interne de la pièce de guidage, la bielle télescopique étant articulée à l'organe de renvoi par la pièce de guidage, la bielle télescopique étant articulée à la structure externe fixe par une extrémité distale de la pièce coulissante.

Une telle configuration de la bielle télescopique par rapport à la structure externe fixe se traduit par une orientation de la bielle dans un sens dans lequel la pièce coulissante est dirigée vers l'amont et la pièce de guidage vers l'aval relativement au sens d'écoulement du fluide dans le conduit, notamment en configuration d'inversion de poussée au moins pour la partie du fluide dirigée vers le volet.

Il est ainsi possible d'améliorer la protection de la bielle télescopique en limitant l'introduction de poussières au sein du logement interne de la pièce de guidage.

Selon l'invention, le volet comprend une extrémité avant et une extrémité arrière configurées de sorte que ledit écoulement de fluide circule dans le conduit dans un sens allant de cette extrémité avant vers cette extrémité arrière en configuration de poussée directe, l'extrémité arrière du volet étant articulée sur la structure externe mobile.

L'articulation du volet par son extrémité arrière permet de simplifier l'architecture globale du mécanisme de commande du volet.

Cela permet en particulier d'éviter tout risque d'interférence de l'organe de renvoi avec le volet qui nécessiterait de réaliser une ouverture dans le volet, ou de le réaliser en deux parties.

Un volet ainsi articulé permet par conséquent d'utiliser un volet monobloc continu, ou plus généralement un volet conventionnel non fendu.

De préférence, le volet peut par conséquent former une structure monobloc continue.

Un tel volet permet d'améliorer les performances en inversion de poussée en maximisant la surface de déviation, de réduire son coût de fabrication, de faciliter l'ajout sur celui-ci d'un organe de traitement acoustique, de réduire sa masse et par conséquent d'améliorer les performances aérodynamiques de l'ensemble propulsif.

Dans un mode de réalisation, ledit deuxième organe de liaison peut comprendre au moins une bielle de liaison, la bielle de liaison étant articulée d'une part à l'organe de renvoi et d'autre part au volet.

L'utilisation d'une telle bielle de liaison permet de simplifier la géométrie et de réduire les dimensions et la masse de l'organe de renvoi.

De préférence, le mécanisme de commande peut être configuré de sorte l'organe de renvoi soit contenu dans un espace délimité radialement à l'intérieur par le volet à la fois en configuration de poussée directe, en configuration d'inversion de poussée et lors d'un passage de l'une à l'autre de ces configurations.

Un tel mécanisme de commande permet d'utiliser un volet écopant tel que décrit ci-dessus et de bénéficier des avantages précités conférés par un tel volet.

Selon l'invention, l'organe de renvoi est articulé audit premier organe de liaison par une deuxième articulation et être articulé audit deuxième organe de liaison par une troisième articulation, la première articulation et la deuxième articulation définissant une première direction de renvoi, la première articulation et la troisième articulation définissant une deuxième direction de renvoi, la première et la deuxième direction de renvoi étant sécantes l'une à l'autre.

Selon une première variante de ce mode de réalisation, l'inverseur peut être configuré de sorte que, en configuration d'inversion de poussée, la première direction de renvoi soit sensiblement parallèle à une direction le long de laquelle s'étend le premier organe de liaison.

Selon une deuxième variante de ce mode de réalisation, l'inverseur peut être configuré de sorte que, en configuration d'inversion de poussée, la deuxième direction de renvoi soit sensiblement parallèle à une direction le long de laquelle s'étend le deuxième organe de liaison.

Cette première et cette deuxième variante peuvent être combinées.

De telles variantes et leur combinaison permettent d'obtenir des chemins d'efforts sensiblement linéaires, ce qui permet d'améliorer la robustesse de l'inverseur en configuration d'inversion de poussée et de simplifier et de réduire la masse du mécanisme de commande.

Dans un mode de réalisation, l'inverseur peut comprendre des grilles de déviation mobiles.

L'invention a aussi pour objet un ensemble propulsif pour aéronef, cet ensemble propulsif pouvant comprendre un inverseur tel que décrit ci-dessus.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe axiale d'un ensemble propulsif d'aéronef ;
[Fig. 2] est une demi-vue schématique en coupe axiale d'un inverseur de poussée conforme à l'invention, dans une configuration de poussée directe ;
[Fig. 3] est une demi-vue schématique en coupe axiale de l'inverseur de la figure 2, dans une première configuration intermédiaire ;
[Fig. 4] est une demi-vue schématique en coupe axiale de l'inverseur de la figure 2, dans une deuxième configuration intermédiaire ;
[Fig. 5] est une demi-vue schématique en coupe axiale de l'inverseur de la figure 2, dans une troisième configuration intermédiaire ;
[Fig. 6] est une demi-vue schématique en coupe axiale de l'inverseur de la figure 2, dans une quatrième configuration intermédiaire ;
[Fig. 7] est une demi-vue schématique en coupe axiale de l'inverseur de la figure 2, dans une configuration d'inversion de poussée ;
[Fig. 8] est une vue schématique d'un système d'actionnement et d'un volet de l'inverseur de la figure 2, dans ladite quatrième configuration intermédiaire.

### Description détaillée de modes de réalisation

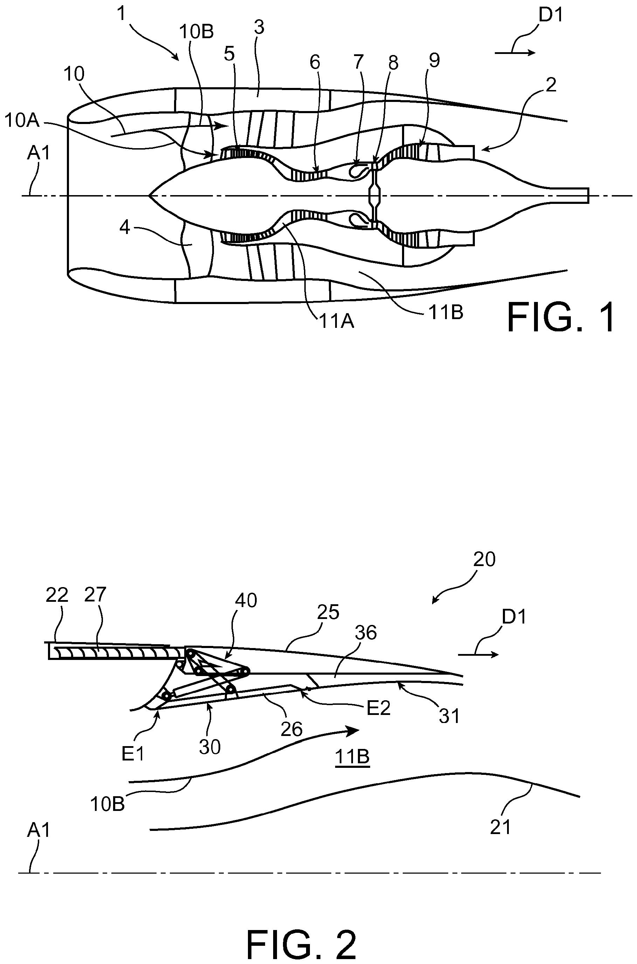

Il est représenté à la figure 1 un ensemble propulsif 1 d'aéronef comprenant une turbomachine 2 carénée par une nacelle 3. Dans cet exemple, la turbomachine 2 est un turboréacteur à double corps et à double flux.

Par la suite, les termes « amont », « aval », « avant » et « arrière » sont définis par rapport à un sens D1 d'écoulement des gaz à travers l'ensemble propulsif 1 lorsque celui-ci exerce une poussée.

Le turboréacteur 2 présente un axe central longitudinal A1 autour duquel s'étendent ses différents composants, en l'occurrence, de l'amont vers l'aval du turboréacteur 2, une soufflante 4, un compresseur basse pression 5, un compresseur haute pression 6, une chambre de combustion 7, une turbine haute pression 8 et une turbine basse pression 9. Les compresseurs 5 et 6, la chambre de combustion 7 et les turbines 8 et 9 forment un générateur de gaz.

Lors du fonctionnement du turboréacteur 2, un écoulement d'air 10 pénètre dans l'ensemble propulsif 1 par une entrée d'air en amont de la nacelle 3, traverse la soufflante 4 puis se divise en un flux primaire 10A central et un flux secondaire 10B. Le flux primaire 10A s'écoule dans une veine principale 11A de circulation des gaz traversant les compresseurs 5 et 6, la chambre de combustion 7 et les turbines 8 et 9. Le flux secondaire 10B s'écoule quant à lui dans une veine secondaire 11B entourant le générateur de gaz et délimitée radialement vers l'extérieur par la nacelle 3.

L'invention concerne un inverseur de poussée 20 tel qu'illustré aux figures 2 à 7 pour inverser la poussée générée par l'ensemble propulsif 1.

L'inverseur 20 comprend d'une part des éléments fixes par rapport à un stator du turboréacteur 2, parmi lesquels une structure interne fixe 21 et une structure externe fixe 22, cette dernière formant un cadre avant.

Cet inverseur 20 comprend d'autre part des éléments mobiles par rapport aux éléments fixes précités, parmi lesquels une structure externe mobile 25 formant un capot mobile, des volets d'obturation 26 et des grilles 27 de déviation.

Le déplacement de ces éléments mobiles par rapport aux éléments fixes permet de modifier la configuration de l'inverseur 20 tel que décrit ci-après.

De manière connue en soi, les volets d'obturation 26 sont répartis circonférentiellement autour d'un axe central longitudinal de l'inverseur 20 qui correspond dans cet exemple à l'axe A1 du turboréacteur 2.

La figure 2 montre l'inverseur 20 dans une configuration de poussée directe, aussi appelée jet direct. Dans cette configuration, le capot mobile 25 est dans une position de fermeture dans laquelle il est axialement en appui étanche contre le cadre avant 22. Les grilles 27, solidaires du capot mobile 25, sont reçues dans un logement du cadre avant 22.

En jet direct, le capot mobile 25 et la structure interne fixe 21 délimitent radialement entre eux un conduit formant une partie aval de la veine secondaire 11B.

Dans cette configuration, les volets d'obturation 26 sont dans une position rétractée afin de ne pas obturer la veine secondaire 11B. Plus précisément, les volets 26 sont en appui contre le capot mobile 25 de sorte qu'une surface interne 30 des volets 26 délimite radialement à l'extérieur une partie respective de la veine secondaire 11B.

Le capot mobile 25 forme une surface interne 31 délimitant radialement à l'extérieur une autre partie de la veine secondaire 11B, en aval des volets 26.

Pour limiter les perturbations du flux secondaire 10B en jet direct, les volets d'obturation 26 et le capot mobile 25 sont agencés de manière à réduire la discontinuité entre la surface interne 30 des volets 26 et la surface interne 31 du capot mobile 25. Dans cet exemple, la surface interne 31 du capot mobile 25 est à cet effet formée par un panneau 36 constituant une surépaisseur de sorte que la surface interne 30 des volets 26 et la surface interne 31 du capot mobile 25 soient affleurantes.

Dans la configuration de la figure 2, l'inverseur 20 permet ainsi de canaliser le flux secondaire 10B vers l'arrière de l'ensemble propulsif 1 de sorte que ce flux 10B contribue pleinement à la propulsion de l'aéronef.

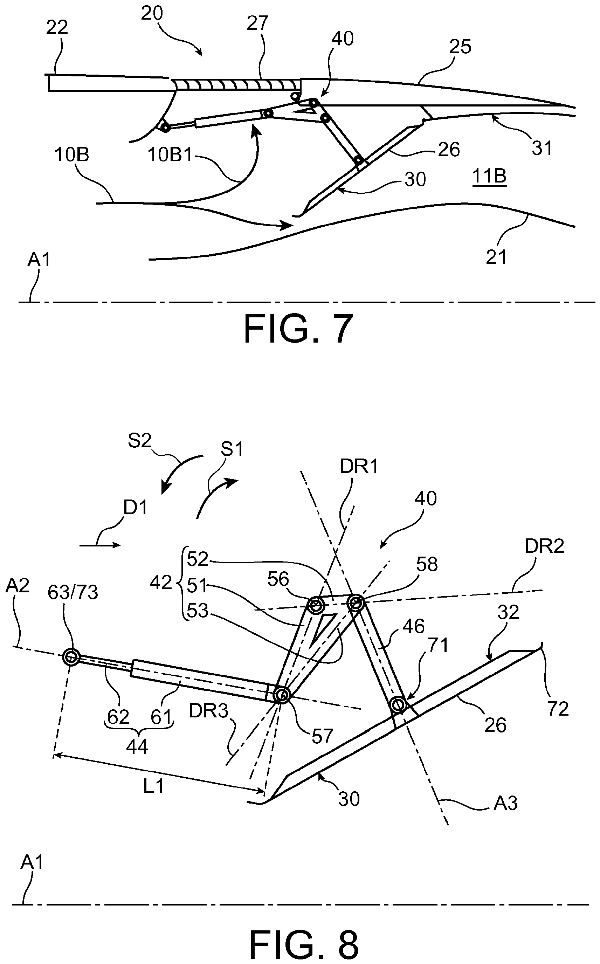

La figure 7 montre l'inverseur 20 dans une configuration d'inversion de poussée, aussi appelée jet inversé. Dans cette configuration, le capot mobile 25 est dans une position d'ouverture dans laquelle il dégage une ouverture radiale constituée dans cet exemple par des ouvertures des grilles 27 qui s'étendent axialement entre le cadre avant 22 et le capot mobile 25.

En jet inversé, les volets d'obturation 26 sont dans une position déployée de manière à dévier une partie 10B1 du flux secondaire 10B vers les grilles 27. La partie 10B1 peut représenter sensiblement la totalité du flux secondaire 10B.

Dans la configuration de la figure 7, l'inverseur 20 permet ainsi de générer une contre-poussée de freinage de l'aéronef à partir du flux secondaire 10B.

Pour modifier la configuration de l'inverseur 20, celui-ci comprend un mécanisme de commande de la position du capot mobile 25 et de la position des volets 26.

Dans cet exemple, le mécanisme de commande comprend de manière conventionnelle des vérins (non représentés) pour déplacer le capot mobile 25 entre les positions de fermeture et d'ouverture, ce déplacement entraînant un déplacement identique des grilles 27 solidaires du capot mobile 25. Dans un autre mode de réalisation non représenté, le passage de la configuration de poussée directe à la configuration d'inversion de poussée se traduit par un déplacement différentiel des grilles 27 et du capot mobile 25.

Le mécanisme de commande comprend par ailleurs une pluralité de systèmes d'actionnement 40, décrits de manière détaillée ci-dessous, configurés pour modifier la position des volets d'obturation 26 lorsque le capot mobile 25 change de position.

Chacun des systèmes d'actionnement 40 est configuré pour modifier la position d'un volet d'obturation 26 respectif.

La description qui suit se réfère à un seul système d'actionnement 40 et un seul volet 26 correspondant, et s'applique identiquement à chacun des autres systèmes d'actionnement et volets 26 correspondants non représentés sur les figures 2 à 8.

De manière générale, le système d'actionnement 40 est configuré de sorte que le déplacement du capot mobile 25 de la position de fermeture (figure 2) vers la position d'ouverture (figure 7) entraîne un déplacement du volet d'obturation 26 de la position rétractée vers la position déployée.

Réciproquement, le système d'actionnement 40 est configuré de sorte que le déplacement du capot mobile 25 de la position d'ouverture (figure 7) vers la position de fermeture (figure 2) entraîne un déplacement de ce volet d'obturation 26 de la position déployée vers la position rétractée.

En référence à la figure 8, le système d'actionnement 40 comprend un organe de renvoi 42, un premier organe de liaison 44 et un deuxième organe de liaison 46.

L'organe de renvoi 42 comprend trois tronçons 51, 52 et 53 reliés entre eux de manière à former un triangle.

Autrement dit, ces tronçons 51, 52 et 53 s'étendent respectivement le long d'une première, d'une deuxième et d'une troisième direction de renvoi DR1, DR2 et DR3, de sorte que les directions de renvoi DR1, DR2 et DR3 sont sécantes l'une à l'autre.

L'organe de renvoi 42 est configuré pour être relié à d'autres éléments de l'inverseur 20 par trois articulations 56, 57 et 58 distinctes, nommées respectivement première, deuxième et troisième articulation.

Dans cet exemple, chacune des articulations 56, 57 et 58 forme un axe assurant un guidage en rotation de l'organe de renvoi 42 autour d'un axe de rotation respectif de cet axe.

A cet effet, l'organe de renvoi 42 comprend à chaque sommet du triangle qu'elle forme un élément de coopération (non représenté) tel qu'un orifice coopérant avec l'une respective de ces articulations 56, 57 et 58. En l'occurrence, le sommet formé par les tronçons 51 et 52 comprend un premier élément de coopération avec la première articulation 56, le sommet formé par les tronçons 51 et 53 comprend un deuxième élément de coopération avec la deuxième articulation 57, et le sommet formé par les tronçons 52 et 53 comprend un troisième élément de coopération avec la troisième articulation 58.

Les tronçons 51, 52 et 53 forment chacun un élément de transmission d'effort entre deux des articulations 56, 57 et 58.

Un tel organe de renvoi 42 forme une bielle à trois articulations connue sous la dénomination « guignol ».

L'organe de renvoi 42 est relié au premier organe de liaison par la deuxième articulation 57.

Dans cet exemple, le premier organe de liaison 44 est une bielle d'entraînement télescopique s'étendant le long d'une direction A2.

La bielle télescopique 44 est un organe passif qui comprend une pièce de guidage 61 telle qu'un tube, appelé tube télescopique, et une pièce coulissante 62 telle qu'une tige, appelée tige télescopique, cette dernière étant reçue dans un logement interne du tube télescopique 61.

Le tube télescopique 61 et la tige télescopique 62 comprennent chacun une extrémité proximale et une extrémité distale. L'extrémité proximale de la tige télescopique 62 est logée dans le tube télescopique 61 tandis que son extrémité distale 63 s'étend à l'extérieur de celui-ci en définissant une première extrémité de la bielle télescopique 44. L'extrémité distale du tube télescopique 61 définit une deuxième extrémité de la bielle télescopique 44. L'extrémité proximale du tube télescopique 61, opposée à son extrémité distale, est donc située selon la direction A2 entre la première et la deuxième extrémité de la bielle télescopique 44.

La distance entre la première et la deuxième extrémité de la bielle télescopique 44, c'est-à-dire entre l'extrémité distale du tube télescopique 61 et l'extrémité distale de la tige télescopique 62, définit une longueur L1.

La valeur de cette longueur L1 varie en fonction de la position de la tige télescopique 62 qui peut être déplacée en translation par rapport au tube télescopique 61 le long de la direction A2, entre une position dans laquelle la bielle télescopique 44 est rétractée et une position dans laquelle elle est déployée, définissant ainsi une course de la bielle télescopique 44. Dans cet exemple, la bielle télescopique 44 comprend une butée (non représentée) limitant son déploiement de manière à définir une valeur maximale de longueur L1 correspondant à un déploiement maximal de la bielle 44.

Pour relier l'organe de renvoi 42 à la bielle télescopique 44, l'extrémité distale du tube télescopique 61 comprend un élément (non représenté) de coopération avec la deuxième articulation 57 de manière à autoriser une rotation de l'organe de renvoi 42 par rapport au tube télescopique 61, et donc par rapport à la bielle télescopique 44, autour de l'axe de rotation de cette deuxième articulation 57. L'axe de rotation de la deuxième articulation 57 est sensiblement perpendiculaire à la direction A2.

L'organe de renvoi 42 est par ailleurs relié au deuxième organe de liaison 46 par la troisième articulation 58.

Dans cet exemple, le deuxième organe de liaison 46 est une bielle conventionnelle, appelée bielle de liaison, pourvue de deux éléments de coopération (non représentés).

L'un desdits éléments de coopération de la bielle de liaison 46 coopère avec la troisième articulation 58 de manière à autoriser une rotation de l'organe de renvoi 42 par rapport à la bielle de liaison 46 autour de l'axe de rotation de cette troisième articulation 58.

L'autre desdits éléments de coopération de la bielle de liaison 46 est configuré pour relier la bielle de liaison 46 au volet 26 par une quatrième articulation 71 formé dans cet exemple par un axe assurant un guidage en rotation de la bielle de liaison 46 autour d'un axe de rotation de cet axe 71. Le volet 26 comprend un élément de coopération (non représenté) correspondant monté sur ce volet 26. Dans cet exemple, cet élément de coopération est un élément de charnière du type oreille en U recevant fixement l'axe formant la quatrième articulation 71, cet élément de charnière étant en saillie par rapport à une surface externe 32 du volet 26 et étant monté sur une partie centrale de celui-ci, entre son extrémité avant E1 et son extrémité arrière E2.

Ainsi, l'organe de renvoi 42 est dans cet exemple relié au volet 26 par l'intermédiaire de la bielle de liaison 46.

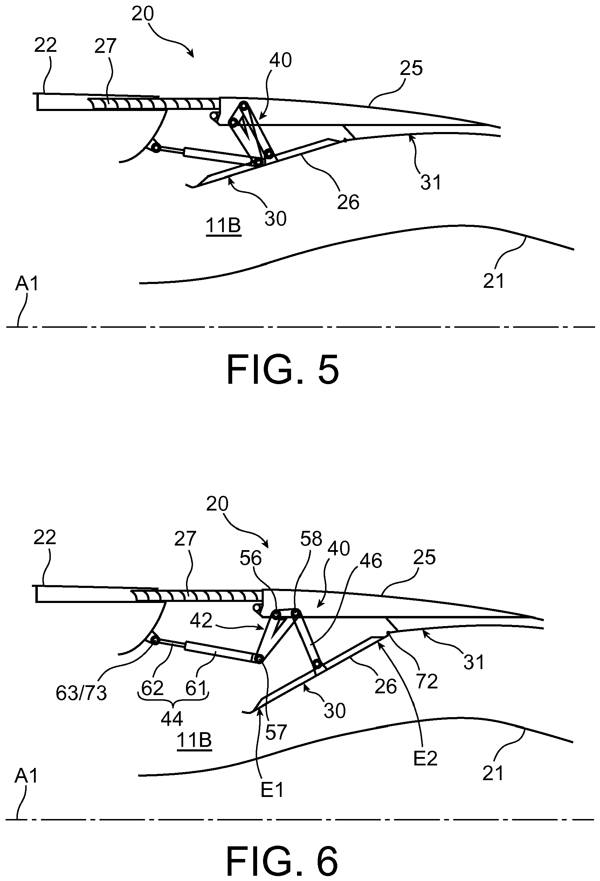

Le système d'actionnement 40 qui vient d'être décrit est monté sur l'inverseur 20 de la manière décrite ci-après en référence à la figure 6.

L'organe de renvoi 42 est relié au capot mobile 25 par la première articulation 56 de manière à autoriser une rotation de l'organe de renvoi 42 par rapport au capot mobile 25 autour de l'axe de rotation de cette première articulation 56. L'axe formant cette première articulation 56 est solidaire du capot mobile 25.

Il est définit une extrémité avant E1 et une extrémité arrière E2 du volet 26. En référence à la figure 2, le volet 26 est configuré de sorte que le flux secondaire 10B circule dans la veine secondaire 11B dans un sens allant de l'extrémité avant E1 vers l'extrémité arrière E2 de ce volet 26 lorsque l'inverseur 20 est en configuration de poussée directe.

En référence à la figure 6, le volet 26 est relié par une extrémité arrière E2 à la structure externe mobile 25 par une cinquième articulation 72 de manière à autoriser une rotation du volet 26 par rapport à la structure externe mobile 25 autour d'un axe de rotation de cette cinquième articulation 72. Dans cet exemple, la cinquième articulation 72 est formé par un axe solidaire du capot mobile 25 assurant un guidage en rotation du volet 26 autour d'un axe de rotation de cet axe 72.

La tige télescopique 62 est reliée au cadre avant 22 par une sixième articulation 73, par coopération d'un élément de coopération (non représenté) de l'extrémité distale 63 de cette tige 62, de manière à autoriser une rotation de la tige télescopique 62 et donc de la bielle télescopique 44 par rapport à la structure externe fixe 22 autour d'un axe de rotation de la sixième articulation 73. Cet élément de coopération est ici un orifice recevant la sixième articulation 73, cette dernière étant elle aussi formée par un axe, solidaire de la structure externe fixe 22, de manière à assurer un guidage en rotation de la tige télescopique 62 autour d'un axe de rotation de cette sixième articulation 73.

Dans cet exemple, les axes de rotation des articulations 56, 57, 58, 71, 72 et 73 sont sensiblement parallèles entre eux et sensiblement perpendiculaires à l'axe central longitudinal A1.

Le volet 26 et le système d'actionnement 40 ainsi montés sur l'inverseur 20 permettent de modifier la position du volet 26 lorsque le capot mobile 25 change de position par simple entraînement mécanique du volet 26.

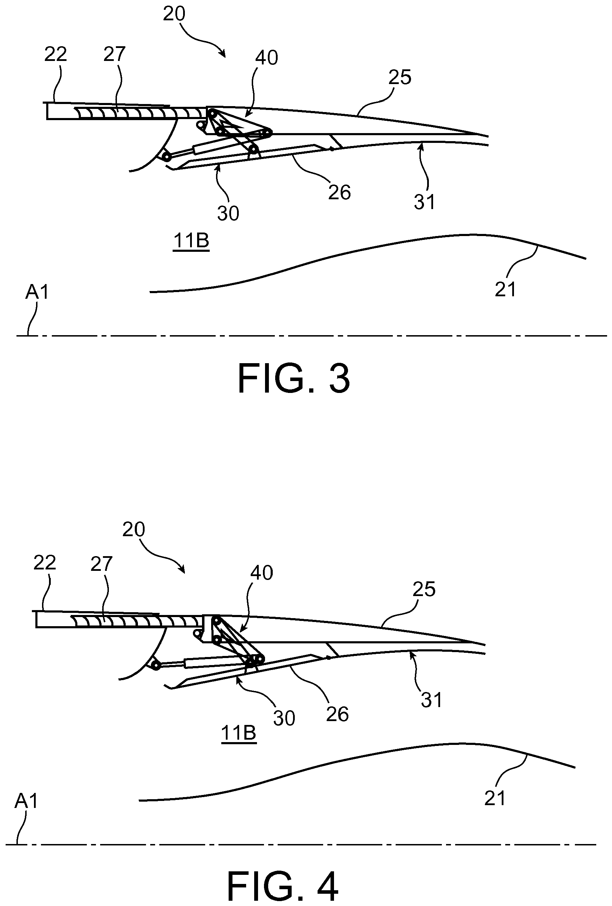

Les figures 2 à 7 montrent l'inverseur 20 dans différentes configurations, en particulier de poussée directe (figure 2), d'inversion de poussée (figure 7) et dans des configurations intermédiaires (figures 3 à 6) permettant d'illustrer la cinématique du système d'actionnement 40.

Dans cet exemple particulier, lorsque l'inverseur 20 passe de la configuration de poussée directe (figure 2) à la configuration d'inversion de poussée (figure 7), les configurations des figures 2 à 7 correspondent respectivement à une position de la structure externe mobile 25 ayant réalisé une course d'ouverture de 0%, 19%, 25%, 40%, 75% et 100%.

A contrario, lorsque l'inverseur 20 passe de la configuration d'inversion de poussée (figure 7) à la configuration de poussée directe (figure 2), les configurations des figures 2 à 7 correspondent respectivement à une position de la structure externe mobile 25 ayant réalisé une course de fermeture de 100%, 81%, 75%, 60%, 25% et 0%.

La description qui suit se rapporte à la course d'ouverture, et s'applique par analogie à la course de fermeture. Toutes les références de la figure 8 n'étant pas reprises sur chacune des figures 2 à 7, il est renvoyé par défaut dans ce qui suit à la figure 8.

Dans la configuration de poussée directe (figure 2), la bielle télescopique 44 est rétractée. L'organe de renvoi 42 est orienté de sorte que la direction de renvoi DR1 passant par la première et la deuxième articulation 56 et 57 soit sensiblement parallèle à l'axe central longitudinal A1 et de sorte que la première articulation 56 soit en amont par rapport à la deuxième articulation 57. La bielle télescopique 44 est quant à elle orientée de sorte que la direction A2 forme avec la direction de renvoi DR1 un angle inférieur à 45°, l'extrémité distale 63 de la tige télescopique 62 étant en amont par rapport à la deuxième articulation 57.

Lorsque la course d'ouverture est initiée, le déplacement du capot mobile 25 exerce sur ledit premier élément de coopération de l'organe de renvoi 42, via la première articulation 56, un effort d'entraînement dans le sens D1. Cet effort est communiqué au tube télescopique 61 par l'intermédiaire du tronçon 51 et de la deuxième articulation 57.

Compte tenu de la configuration du système d'actionnement 40 lorsque l'inverseur 20 est en configuration de poussée directe (figure 2), le déplacement du capot mobile 25 entraîne ainsi le déploiement de la bielle télescopique 44 jusqu'à la configuration de la figure 3 dans laquelle cette bielle 44 est totalement déployée.

Le déplacement du capot mobile 25 de la position de fermeture de la figure 2 à la position de la figure 3 définit une première phase de la course d'ouverture.

Lors de cette première phase, ni l'organe de renvoi 42 ni le volet 26 ne sont entraînés en rotation par rapport au capot mobile 25, compte tenu du déploiement de la bielle télescopique 44 qui retarde le déploiement du volet 26.

Une deuxième phase de la course d'ouverture est accomplie lors du déplacement du capot mobile 25 de la configuration de la figure 3 à celle de la figure 7.

Lors de cette deuxième phase, la bielle télescopique 44 reste totalement déployée et se comporte comme une bielle standard, en transmettant le déplacement dans le sens D1 de l'extrémité distale du tube télescopique 61 à l'extrémité distale 63 de la tige télescopique 62.

Le déplacement du capot mobile 25 exerce toujours, lors de cette deuxième phase de la course d'ouverture, un effort d'entraînement de l'organe de renvoi 42 dans le sens D1, via la première articulation 56. Cet effort est communiqué à la bielle télescopique 44 par l'intermédiaire du tronçon 51 et de la deuxième articulation 57.

La bielle télescopique 44 étant totalement déployée, l'orientation respective du tronçon 51 selon la première direction de renvoi DR1 et de la bielle 44 selon la direction A2 permet à l'organe de renvoi 42 d'être entraîné en rotation par rapport au capot mobile 25, dans un premier sens de rotation S1 autour de l'axe de rotation de la première articulation 56.

La rotation de l'organe de renvoi 42 résulte de l'action mutuelle :
- d'une part, de l'effort d'entraînement exercé sur l'organe de renvoi 42 via la première articulation 56, qui s'exerce sur ledit premier élément de coopération de l'organe de renvoi 42 dans une direction parallèle à l'axe central longitudinal A1 et dans le même sens que D1,
- d'autre part, d'un effort d'entraînement correspondant exercé sur l'organe de renvoi 42 via la deuxième articulation 57, qui s'exerce sur ledit deuxième élément de coopération de l'organe de renvoi 42 dans une direction parallèle à l'axe central longitudinal A1 et un sens opposé au sens D1.

La rotation de l'organe de renvoi 42 lors de la course d'ouverture se traduit par un déplacement de la troisième articulation 58, en rotation autour de l'axe de rotation de la première articulation 56, entraînant un déplacement de la bielle de liaison 46 de sorte que l'extrémité de cette bielle 46 articulée au volet 26 se déplace selon une trajectoire orientée radialement vers l'intérieur.

Dans la mesure où le volet 26 est articulé au capot mobile 25 par son extrémité arrière E2 via la cinquième articulation 72, la rotation de l'organe de renvoi 42 lors de la course d'ouverture entraîne un déploiement du volet 26.

Lorsque l'inverseur 20 atteint la configuration d'inversion de poussée (figure 7), la première direction de renvoi DR1 est sensiblement parallèle à la direction A2 de la bielle télescopique 44 de sorte que des efforts puissent transiter linéairement entre le capot mobile 25 et le cadre avant 22 via la bielle télescopique 44 et le tronçon 51 de l'organe de renvoi 42.

De plus, dans cette configuration d'inversion de poussée, la deuxième direction de renvoi DR2 est sensiblement parallèle à une direction A3 le long de laquelle s'étend la bielle de liaison 46 de sorte que des efforts puissent transiter linéairement entre le volet 26 et le capot mobile 25 via l'organe de renvoi 42 et le tronçon 52 de l'organe de renvoi 42. Le volet 26 s'étend en outre dans un plan sensiblement perpendiculaire à la direction A3 de la bielle de liaison 46.

Il en résulte une amélioration des chemins d'efforts du volet 26 et du système d'actionnement 40 lorsque l'inverseur 20 est en configuration d'inversion de poussée.

Comme cela se déduit des figures 2 à 7 et de la description qui précède, le système d'actionnement 40 reste dans cet exemple intégralement contenu dans un espace délimité radialement à l'intérieur par le volet 26, cela dans chacune des configurations de l'inverseur 20. Il est ainsi possible d'utiliser un volet 26 monobloc continu, c'est-à-dire ne contenant aucune ouverture destinée à être traversée lors de certaines phases par une partie du système d'actionnement 40.

L'inverseur 20 peut comprendre un carénage (non représenté) configuré pour protéger la bielle télescopique 44 vis-à-vis de projections susceptibles d'endommager son mécanisme, et/ou pour diminuer la perturbation de la partie 10B1 du flux secondaire 10B redirigée vers les grilles 27 en configuration d'inversion de poussée.

La description qui précède n'est aucunement limitative. Par exemple, dans un mode de réalisation non représenté, les grilles 27 de déviation sont fixes, solidaires de la structure externe fixe 22. Dans un autre mode de réalisation non représenté, la bielle d'entraînement 44 n'est pas une bielle télescopique mais une bielle à deux articulations conventionnelle similaire à la bielle de liaison 46.

## Revendications

1. Inverseur de poussée (20) pour ensemble propulsif (1) d'aéronef, cet inverseur (20) comprenant une structure externe fixe (22), une structure externe mobile (25), au moins un volet d'obturation (26) comprenant une extrémité arrière (E2) articulée sur la structure externe mobile (25), et un mécanisme de commande configuré pour faire passer l'inverseur (20) entre :
- une configuration de poussée directe dans laquelle la structure externe mobile (25) est dans une position de fermeture et le volet (26) est dans une position rétractée de manière à canaliser un écoulement de fluide (10B) dans un conduit (11B) délimité radialement à l'extérieur par la structure externe mobile (25), et
- une configuration d'inversion de poussée dans laquelle la structure externe mobile (25) est dans une position d'ouverture dégageant une ouverture radiale, et dans laquelle le volet (26) est dans une position déployée de manière à dévier au moins une partie (10B1) dudit écoulement de fluide vers ladite ouverture radiale,
cet inverseur (20) étant **caractérisé en ce que** le mécanisme de commande comprend au moins un organe de renvoi (42) comportant un premier, un deuxième et un troisième tronçons (51, 52, 53) reliés entre eux de manière à former un triangle et s'étendant respectivement le long d'une première, d'une deuxième et d'une troisième directions de renvoi (DR1, DR2, DR3) sécantes l'une à l'autre, le premier et le deuxième tronçons (51, 52) formant un sommet comprenant un premier élément de coopération, les premier et troisième tronçons (51, 53) formant un sommet comprenant un deuxième élément de coopération, et les second et troisième tronçon (52, 53) formant un sommet comprenant un troisième élément de coopération, l'organe de renvoi (42) étant :
- relié à la structure externe mobile (25) par une première articulation (56) coopérant avec ledit premier élément de coopération de manière à autoriser une rotation de l'organe de renvoi (42) par rapport à la structure externe mobile (25) autour d'un axe de rotation de cette première articulation (56),
- relié à la structure externe fixe (22) par un premier organe de liaison (44), l'organe de renvoi (42) étant articulé audit premier organe de liaison (44) par une deuxième articulation (57) coopérant avec le deuxième élément de coopération, le premier organe de liaison (44) étant configuré de manière à déplacer l'organe de renvoi (42) en rotation autour de l'axe de rotation de la première articulation (56) dans un premier sens (S1) lorsque la structure externe mobile (25) est déplacée vers la position d'ouverture et dans un deuxième sens (S2) lorsque la structure externe mobile (25) est déplacée vers la position de fermeture,
- relié au volet (26) par un deuxième organe de liaison (46), l'organe de renvoi (42) étant articulé audit deuxième organe de liaison (46) par une troisième articulation (58) coopérant avec le troisième élément de coopération, le deuxième organe de liaison (46) étant configuré de manière à déplacer le volet (26) vers la position déployée lorsque l'organe de renvoi (42) est déplacé dans ledit premier sens (S1) et vers la position rétractée lorsque l'organe de renvoi (42) est déplacé dans ledit deuxième sens (S2).

2. Inverseur (20) selon la revendication 1, dans lequel ledit premier organe de liaison comprend au moins une bielle d'entraînement (44), la bielle d'entraînement (44) étant articulée d'une part à l'organe de renvoi (42) et d'autre part à la structure externe fixe (22).

3. Inverseur (20) selon la revendication 2, dans lequel la bielle d'entraînement (44) est une bielle télescopique.

4. Inverseur (20) selon la revendication 3, dans lequel la bielle télescopique (44) comprend une pièce de guidage (61) et une pièce coulissante (62) au sein d'un logement interne de la pièce de guidage (61), la bielle télescopique (44) étant articulée à l'organe de renvoi (42) par la pièce de guidage (61), la bielle télescopique (44) étant articulée à la structure externe fixe (22) par une extrémité distale (63) de la pièce coulissante (62).

5. Inverseur (20) selon l'une quelconque des revendications 1 à 4, dans lequel le volet (26) comprend une extrémité avant (E1) et l'extrémité arrière (E2) configurées de sorte que ledit écoulement de fluide (10B) circule dans le conduit (11B) dans un sens (D1) allant de cette extrémité avant (E1) vers cette extrémité arrière (E2) en configuration de poussée directe.

6. Inverseur (20) selon l'une quelconque des revendications 1 à 5, dans lequel ledit deuxième organe de liaison (46) comprend au moins une bielle de liaison (46), la bielle de liaison (46) étant articulée d'une part à l'organe de renvoi (42) et d'autre part au volet (26).

7. Inverseur (20) selon l'une quelconque des revendications 1 à 6, dans lequel le mécanisme de commande est configuré de sorte l'organe de renvoi (42) soit contenu dans un espace délimité radialement à l'intérieur par le volet (26) à la fois en configuration de poussée directe, en configuration d'inversion de poussée et lors d'un passage de l'une à l'autre de ces configurations.

8. Inverseur (20) selon l'une quelconque des revendications 1 à 7, dans lequel la première articulation (56) et la deuxième articulation (57) définissent la première direction de renvoi (DR1), la première articulation (56) et la troisième articulation (58) définissent la deuxième direction de renvoi (DR2), et dans lequel, en configuration d'inversion de poussée :
- la première direction de renvoi (DR1) est sensiblement parallèle à une direction (A2) le long de laquelle s'étend le premier organe de liaison (44), et/ou
- la deuxième direction de renvoi (DR2) est sensiblement parallèle à une direction (A3) le long de laquelle s'étend le deuxième organe de liaison (46).

9. Inverseur (20) selon l'une quelconque des revendications 1 à 8, cet inverseur (20) comprenant des grilles de déviation (27) mobiles.

10. Ensemble propulsif (1) pour aéronef, cet ensemble propulsif (1) comprenant un inverseur (20) selon l'une quelconque des revendications 1 à 9.

## Patentansprüche

1. Schubumkehrvorrichtung (20) für ein Flugzeugantriebssystem (1), wobei die Umkehrvorrichtung (20) eine feste Außenstruktur (22), eine bewegliche Außenstruktur (25), mindestens eine Verschlussklappe (26), die ein an der beweglichen Außenstruktur (25) angelenktes hinteres Ende (E2) umfasst, und einen Steuermechanismus umfasst, der derart konfiguriert ist, dass er die Umkehrvorrichtung (20) umschaltet zwischen:
- einer Direktschubkonfiguration, bei der die bewegliche Außenstruktur (25) in einer geschlossenen Position ist und die Klappe (26) in einer zurückgezogenen Position ist, um einen Fluidstrom (10B) in eine Leitung (11B) zu leiten, die durch die bewegliche Außenstruktur (25) radial nach außen begrenzt wird, und
- einer Schubumkehrkonfiguration, wobei die bewegliche Außenstruktur (25) in einer geöffneten Position ist, die eine radiale Öffnung freigibt, und wobei die Klappe (26) in einer ausgefahrenen Position ist, um mindestens einen Teil (10B1) des Fluidstroms in Richtung der radialen Öffnung umzuleiten,
wobei die Umkehrvorrichtung (20) **dadurch gekennzeichnet ist, dass** der Steuermechanismus mindestens ein Umlenkbauteil (42) umfasst, das einen ersten, einen zweiten und einen dritten Abschnitt (51, 52, 53) umfasst, die so miteinander verbunden sind, dass sie ein Dreieck bilden und sich jeweils entlang einer ersten, einer zweiten und einer dritten Umlenkrichtung (DR1, DR2, DR3) erstrecken, die zueinander sekant sind, wobei der erste und der zweite Abschnitt (51, 52), die einen Scheitelpunkt bilden, ein erstes Kooperationselement umfassen, wobei der erste und der dritte Abschnitt (51, 53), die einen Scheitelpunkt bilden, ein zweites Kooperationselement umfassen, und der zweite und der dritte Abschnitt (52, 53), die einen Scheitelpunkt bilden, ein drittes Kooperationselement umfassen, wobei das Umlenkbauteil (42):
- über ein erstes Gelenk (56) mit der beweglichen Außenstruktur (25) verbunden ist, das mit dem ersten Kooperationselement zusammenwirkt, um eine Drehung des Umlenkbauteils (42) im Verhältnis zur beweglichen Außenstruktur (25) um eine Drehachse des ersten Gelenks (56) zu ermöglichen,
- über ein erstes Verbindungsbauteil (44) mit der festen Außenstruktur (22) verbunden ist, wobei das Umlenkbauteil (42) über ein zweites Gelenk (57), das mit dem zweiten Kooperationselement zusammenwirkt, an das erste Verbindungsbauteil (44) angelenkt ist, wobei das erste Verbindungsbauteil (44) derart konfiguriert ist, dass es das Umlenkbauteil (42) in Drehung um die Drehachse des ersten Gelenks (56) in eine erste Richtung (S1) verschiebt, wenn die bewegliche Außenstruktur (25) in Richtung der geöffneten Position verschoben wird, und in eine zweite Richtung (S2), wenn die bewegliche Außenstruktur (25) in Richtung der geschlossenen Position verschoben wird,
- über ein zweites Verbindungsbauteil (46) mit der Klappe (26) verbunden ist, wobei das Umlenkbauteil (42) über ein drittes Gelenk (58), das mit dem dritten Kooperationselement zusammenwirkt, an das zweite Verbindungsbauteil (46) angelenkt ist, wobei das zweite Verbindungsbauteil (46) derart konfiguriert ist, dass es die Klappe (26) in Richtung der ausgefahrenen Position verschiebt, wenn das Umlenkbauteil (42) in die erste Richtung (S1) verschoben wird, und in Richtung der zurückgezogenen Position, wenn das Umlenkbauteil (42) in die zweite Richtung (S2) verschoben wird.

2. Umkehrvorrichtung (20) nach Anspruch 1, wobei das erste Verbindungsbauteil mindestens eine Antriebspleuelstange (44) umfasst, wobei die Antriebspleuelstange (44) einerseits an das Umlenkbauteil (42) und andererseits an die feste Außenstruktur (22) angelenkt ist.

3. Umkehrvorrichtung (20) nach Anspruch 2, wobei die Antriebspleuelstange (44) eine teleskopische Pleuelstange ist.

4. Umkehrvorrichtung (20) nach Anspruch 3, wobei die teleskopische Pleuelstange (44) ein Führungsteil (61) und ein Gleitteil (62) innerhalb eines Innengehäuses des Führungsteils (61) umfasst, wobei die teleskopische Pleuelstange (44) durch das Führungsteil (61) an das Umlenkbauteil (42) angelenkt ist, wobei die teleskopische Pleuelstange (44) über ein distales Ende (63) des Gleitteils (62) an die feste Außenstruktur (22) angelenkt ist.

5. Umkehrvorrichtung (20) nach einem der Ansprüche 1 bis 4, wobei die Klappe (26) ein vorderes Ende (E1) und ein hinteres Ende (E2) umfasst, die derart konfiguriert sind, dass der Fluidstrom (10B) in der Leitung (11B) in einer Richtung (D1), die vom vorderen Ende (E1) in Richtung des hinteren Endes (E2) verläuft, in der Direktschubkonfiguration zirkuliert.

6. Umkehrvorrichtung (20) nach einem der Ansprüche 1 bis 5, wobei das zweite Verbindungsbauteil (46) mindestens eine Verbindungspleuelstange (46) umfasst, wobei die Verbindungspleuelstange (46) einerseits an das Umlenkbauteil (42) und andererseits an die Klappe (26) angelenkt ist.

7. Umkehrvorrichtung (20) nach einem der Ansprüche 1 bis 6, wobei der Steuermechanismus derart konfiguriert ist, dass das Umlenkbauteil (42) in einem Raum enthalten ist, der radial innen von der Klappe (26) sowohl in der Direktschubkonfiguration als auch in der Schubumkehrkonfiguration und während eines Wechsels von einer dieser Konfigurationen in die andere begrenzt wird.

8. Umkehrvorrichtung (20) nach einem der Ansprüche 1 bis 7, wobei das erste Gelenk (56) und das zweite Gelenk (57) die erste Umlenkrichtung (DR1) definieren, das erste Gelenk (56) und das dritte Gelenk (58) die zweite Umlenkrichtung (DR2) definieren, und wobei in der Schubumkehrkonfiguration:
- die erste Umlenkrichtung (DR1) im Wesentlichen parallel zu einer Richtung (A2) ist, entlang der sich das erste Verbindungsbauteil (44) erstreckt, und/oder
- die zweite Umlenkrichtung (DR2) im Wesentlichen parallel zu einer Richtung (A3) ist, entlang der sich das zweite Verbindungsbauteil (46) erstreckt.

9. Umkehrvorrichtung (20) nach einem der Ansprüche 1 bis 8, wobei die Umkehrvorrichtung (20) bewegliche Ablenkungsgitter (27) umfasst.

10. Antriebseinheit (1) für ein Flugzeug, wobei die Antriebseinheit (1) eine Umkehrvorrichtung (20) nach einem der Ansprüche 1 bis 9 umfasst.

## Claims

1. Thrust reverser (20) for an aircraft propulsion unit (1), this reverser (20) comprising a fixed external structure (22), a movable external structure (25), at least one closure flap (26) comprising a rear end (E2) articulated on the movable external structure (25), and a control mechanism configured to switch the reverser (20) between:
- a direct-thrust configuration wherein the movable external structure (25) is in a closed position and the flap (26) is in a retracted position so as to channel the flow of fluid (10B) in a conduit (11B) delimited radially outwards by the movable external structure (25), and
- a thrust-reversal configuration wherein the movable external structure (25) is in an open position leaving clear a radial opening, and wherein the flap (26) is in a deployed position so as to divert at least a part (10B1) of said flow of fluid towards said radial opening,
this reverser (20) being **characterised in that** the control mechanism comprises at least one transmission member (42) including first, second and third portions (51, 52, 53) connected together so as to form a triangle and extending respectively along first, second and third transmission directions (DR1, DR2, DR3) secant to one another, the first and second portions (51, 52) forming a vertex comprising a first cooperation element, the first and third portions (51, 53) forming a vertex comprising a second cooperation element, and the second and third portions (52, 53) forming a vertex comprising a third cooperation element, the transmission member (42) being:
- connected to the movable external structure (25) by a first articulation (56) cooperating with said first cooperation element so as to allow a rotation of the transmission member (42) with respect to the movable external structure (25) about a rotation axis of this first articulation (56),
- connected to the fixed external structure (22) by a first connection member (44), the transmission member (42) being articulated on said first connection member (44) by a second articulation (57) cooperating with the second cooperation element, the first connection element (44) being configured so as to rotate the transmission member (42) about the rotation axis of the first articulation (56) in a first direction (S1) when the movable external structure (25) is moved towards the open position and in a second direction (S2) when the movable external structure (25) is moved towards the closed position,
- connected to the flap (26) by a second connection member (46), the transmission member (42) being articulated on said second connection member (46) by a third articulation (58), cooperating with the third cooperation element, the second connection member (46) being configured so as to move the flap (26) towards the deployed position when the transmission member (42) is moved in said first direction (S1) and towards the retracted position when the transmission member (42) is moved in said second direction (S2).

2. Reverser (20) according to claim 1, wherein said first connection member comprises at least one drive link (44), the drive link (44) being articulated firstly on the transmission member (42) and secondly on the fixed external structure (22).

3. Reverser (20) according to claim 2, wherein the drive link (44) is a telescopic link.

4. Reverser (20) according to claim 3, wherein the telescopic link (44) comprises a guide piece (61) and a sliding piece (62) in an internal housing of the guide piece (61), the telescopic link (44) being articulated on the transmission member (42) by the guide piece (61), the telescopic link (44) being articulated on the fixed external structure (22) by a distal end (63) of the sliding piece (62).

5. Reverser (20) according to any one of claims 1 to 4, wherein the flap (26) comprises a front end (E1) and the rear end (E2) both configured so that said flow of fluid (10B) circulates in the conduit (11B) in a direction (D1) going from this front end (E1) towards this rear end (E2) in direct-thrust configuration.

6. Reverser (20) according to any one of claims 1 to 5, wherein said second connection member (46) comprises at least one connection link (46), the connection link (46) being articulated firstly on the transmission member (42) and secondly on the flap (26).

7. Reverser (20) according to any one of claims 1 to 6, wherein the control mechanism is configured so that the transmission member (42) is contained in a space delimited radially inwards by the flap (26) in direct-thrust configuration, in thrust-reversal configuration and when changing from one of these configurations to the other.

8. Reverser (20) according to any one of claims 1 to 7, wherein the first articulation (56) and the second articulation (57) define the first transmission direction (DR1), the first articulation (56) and the third articulation (58) define the second transmission direction (DR2), and wherein, in the thrust-reversal configuration:
- the first transmission direction (DR1) is substantially parallel to a direction (A2) along which the first connection member (44) extends, and/or
- the second transmission direction (DR2) is substantially parallel to a direction (A3) along which the second connection member (46) extends.

9. Reverser (20) according to any one of claims 1 to 8, this reverser (20) comprising movable diversion grilles (37).

10. Propulsion unit (1) for an aircraft, this propulsion unit (1) comprising a reverser (20) according to any one of claims 1 to 9.
